# EUROPEAN PATENT SPECIFICATION

(11) **EP 1 451 958 B1**
(45) Date of publication and mention of the grant of the patent: **26.12.2018**
(21) Application number: 02803194.6
(22) Date of filing: 09.11.2002
(51) Int. Cl.: H04J 3/16, H04L 29/06, H04N 7/24, G11B 20/00

(54) **FILE SPLITTING, SCALABLE CODING, AND ASYNCHRONOUS TRANSMISSION IN STREAMED DATA TRANSFER**
DATEIAUFTEILUNGS-SCALADE-CODIERUNG UND ASYNCHRONE ÜBERTRAGUNG BEIM STREAM-DATENTRANSFER
DECOUPAGE DE FICHIERS, CODAGE ECHELONNABLE, ET TRANSMISSION ASYNCHRONE DANS UN TRANSFERT CONTINU DE DONNEES

(30) Priority: 09.11.2001 US 337939 P; 08.11.2002 US 291210
(43) Date of publication of application: 01.09.2004
(73) Proprietor: Excalibur IP, LLC, New York, NY 10017 (US)
(72) Inventor: DUNNING, Ted, E., San Diego, CA 92126 (US); DORON, Amir, San Diego, CA 92119 (US); GRUHNE, Matthias, 99718 Westgreussen (US)
(74) Representative: Boult Wade Tennant LLP
(86) International application number: PCT/US2002/035903
(87) International publication number: WO 2003/042783

(56) References cited:
- EP-A- 1 033 880
- WO-A-00/31964
- WO-A-01/73639
- US-A- 5 898 833
- US-A- 5 930 526
- US-A1- 2003 007 507
- US-B1- 6 292 795
- Jason Thibeault ET AL: "alt.binaries.sounds.midi Frequently Asked Questions", , 1 July 1997 (1997-07-01), pages 1-23, XP055265936, Retrieved from the Internet: URL:http://www.markheadrick.com/midi/absmf aq.txt [retrieved on 2016-04-15]

## Description

### Background of the Invention

### Field of the Invention

The present invention is related to delivery of streamed programs such as audio and video, and more particularly to systems and methods providing improved control, efficiency, and quality of such streamed transmissions using file splitting, scalable coding, and asynchronous transmission.

### Description of the Background Art

Delivery of audio and video programs over the Internet provides several advantages over conventional broadcast media such as radio and television. Unlike broadcast media, which require users to receive programs at particular times, or to record them for later use, Internet delivery allows users to select and receive programs upon demand, at a time that is convenient to them. For example, a user may browse to a news story, presented in text format, and click on a link that initiates playback of an audio report on the news item. Users may also click on links to hear songs or song samples, as is common in e-commerce sites, such as amazon.com or cdnow.com, in order to permit users to sample songs before purchasing compact discs (CDs). Internet delivery of audio programming may also be used for implementing personalized radio stations, which deliver music tracks selected in response to the tastes of particular users. Similar functionality is available for the delivery of video programs on demand, allowing users to view sports highlights, news reports, music videos, and even films and television shows, over the Internet.

Software for playing back such audio and video files is known in the art, including for example the Windows Media Player from Microsoft Corporation, and the RealPlayer from Real Networks, Inc. Functionality for audio and video delivery may also be built into browsers such as Netscape Navigator and Microsoft Internet Explorer.

One disadvantage of Internet delivery of audio and video programs is the relatively limited bandwidth that is available for any particular program. Compared with broadcast media, such as radio, television (over-the-air or cable), and the like, typical Internet connections offer far less bandwidth and thus limit the amount of information that may be transmitted to the end user in a given period of time. Thus, even with the application of aggressive compression algorithms, sound quality and picture quality of streamed programs received over the Internet tend to be substandard. For example, due to the limited number of bits available, existing Internet delivery schemes fail to provide received audio programs at a quality approaching that of CDs.

As an alternative to streamed programs, and in order to improve quality of the received programs, users may download programs and then, subsequent to downloading them, play the received program via their computers. Since the program is not being viewed or listened to in "real time", more time is available to transmit and receive the program, so that larger files may be provided, and better quality achieved. However, it may take many minutes, or even hours, to download a short program at a reasonable level of quality. Thus, such a scheme does not provide the user with an immediate listening or viewing experience; rather, the user must wait until the program is downloaded before it can be viewed or listened to.

US5898833 discloses a method for increasing the effective bandwidth of video sequences transmitted over a network by arranging for multiple different versions of a video file, at different quality levels, to be transmitted and combined at the client.

US5930526 discloses progressive transmission of compressed video, including video data, in which sets of data received by a client are interleaved for playback.

WO01/73639 discloses streaming information over a network by splitting the information into a first file and a second file, transmitting the first file to a recipient along with a player that plays the first file, detecting when the recipient plays the first file and transmitting the second file while the first file is being played.

### SUMMARY OF THE INVENTION

According to a first aspect of the invention, there is provided a method of receiving a media file according to claim 1.

According to a second aspect of the invention, there is provided an apparatus according to claim 24.

Embodiments of the present invention provide improved quality, security, and efficiency for streamed programs, by combining received streamed data with previously stored (cached) data. In one embodiment, a program file containing program data such as audio, video, or the like, is split into two or more sections. In one embodiment, each section is not usable on its own to provide program output (e.g. audio signals where the program file is an audio file), but can only be used when recombined with the remaining sections. In one embodiment, one section of the split data is considerably smaller than the other section(s). This splitting allows the second section to be cached by a client machine without a danger that the client has a persistent usable copy of the original file. This allows the benefits of caching to be realized without providing users with unauthorised persistent copies of files.

For example, the second section may be transmitted in advance of the actual playback of a program file, thus avoiding bottlenecks that may result when the entire program file is transmitted upon user demand. Until the first section is transmitted, the user will not be able to play the program file. The smaller first section may be streamed to allow playback of the program file. The first section is discarded after playback so that no persistent usable copy of the program file remains on the user's machine. The second section remains cached, allowing future streaming playback to be performed efficiently. The ability to not provide a persistent usable
copy of the program file can be advantageous because copyright holders may not wish to authorize such persistent copies, since the persistent copy could cannibalize revenues from sales of the program file in a tangible medium (such as audio CDs), or paid future downloads, streamed or otherwise, of the program file.

Alternatively, the program file is split into sections in order to provide scalability in the playback quality level. The first section is playable at a relatively low quality level. Additional sections of data may be added to the first section to increase the quality level. Thus, the program file may be downloaded and played at a quality level determined by the bandwidth of the connection. The sections may be cached so that when it is desired to play the program file again, additional sections may be downloaded and added for higher quality playback.

In some embodiments, a persistent copy of a playable version of the program file is not stored on the client. The additional sections are not playable without the first level. Thus, the additional sections may be cached, so that the file can be played back by combining a downloaded first section with cached additional sections.

The file splitting and scalable coding embodiments may also both be used on the same program file. This allows most of the file to be cached while still providing the server control over when the file may be played back. It also allows subsequent playbacks of the file after the first to be progressively higher quality as more of the scalable sections are transmitted with every playback.

### Brief Description of the Drawings

Fig. 1A is a block diagram of a functional architecture.
Fig. 2 is a block diagram of a conceptual architecture for one embodiment.
Figs. 3A and 3B illustrate a method for splitting a program file according to one embodiment of the present invention.
Figs. 3C and 3D illustrate a method of receiving and playing a previously split program file according to one embodiment of the present invention.
Fig. 4A illustrates an example of a scalably-coded program file.
Fig. 4B is a block diagram illustrating the use and combination of primary data and secondary data to provide different playback quality levels.
Figs. 4C and 4D depict examples of scalable coding according to one embodiment of the present invention.
Figs. 5A and 5B depict techniques for combining file splitting and scalable coding according to one embodiment of the present invention.

### Detailed Description of the Preferred Embodiments

The following description of preferred embodiments of the present invention is presented in the context of an Internet-based jukebox or personalized radio station where it is desirable to stream music files. One skilled in the art will recognize that the present invention may be implemented in many other domains and environments, both within the context of musical files, and in other contexts. Accordingly, the following description, while intended to be illustrative of a particular implementation, is not intended to limit the scope of the present invention or its applicability to other domains and environments. Rather, the scope of the present invention is limited and defined solely by the claims.

### Architecture Overview

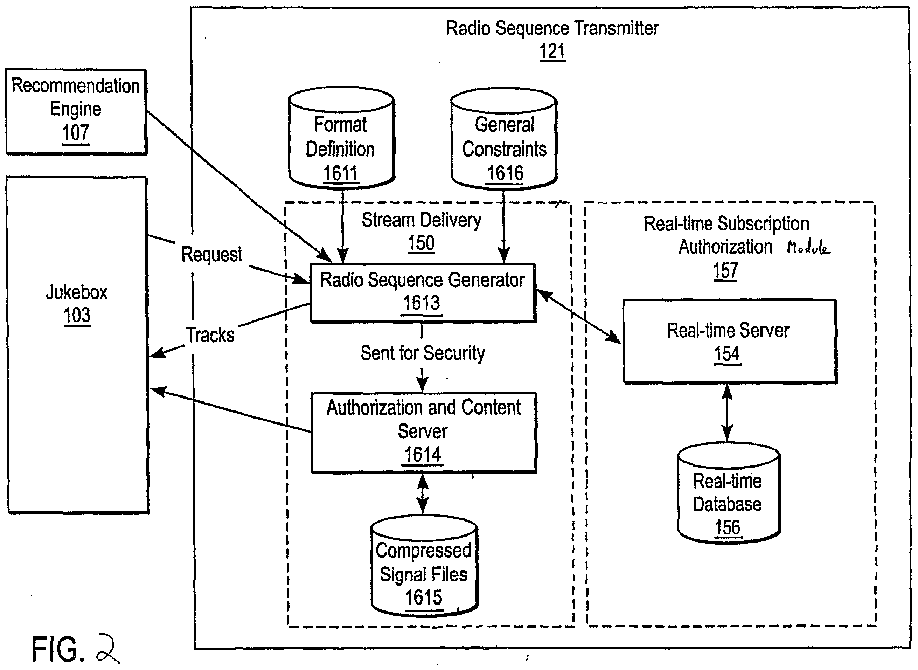

Referring now to Fig. 2, there is shown a conceptual architecture of one embodiment of the present invention. In the architecture of Fig. 2, the invention is implemented in connection with a web-based "jukebox" 103, or personalized radio station.

Stream delivery system 150 interacts with jukebox 103 to specify a sequence of audio files to deliver to jukebox 103. In some embodiments, this jukebox 103 may run on a client such as a personal computer, while the stream deliver server system is part of a remote server, connected to the client via a network. Jukebox 103 transmits requests to stream delivery system 150, and stream delivery system 150 delivers the audio files, as tracks, to jukebox 103. Stream delivery system 150 also communicates with real-time subscription authorization module 157, which includes real-time server 154 and database 156 that keep track of which user accounts are active and enforces global business rules about which accounts can listen to the radio at a given time. Within stream delivery system 150, there are a number of distinct software entities. Radio sequence generator 1613 receives requests from jukebox 103, receives format definitions 1611 and general constraints 1616, and receives recommendations from recommendation engine 107, to generate track selections to be transmitted to jukebox 103. The track selections generated by radio sequence generator 1613 specify which files to play according to estimated listener preferences as well as predetermined station formats. Authorization and content server 1614 keeps a record of the files that are selected by radio sequence generator 1613; server 1614 is consulted by radio sequence generator 1613 when files are requested. If generator 1613 does not provide the necessary security information, server 1614 flags this anomaly and declines to provide the data.

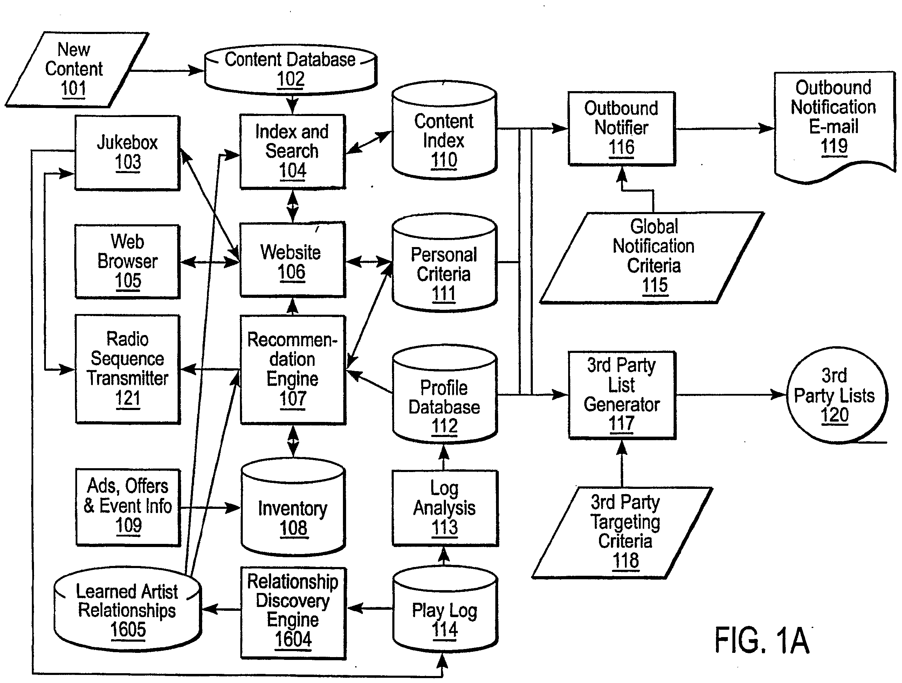

Referring now to Fig. 1A, there is shown a block diagram of a functional architecture for one embodiment of the present invention. Content index 110 provides a concise index of content stored in database 102, and is generated by conventional index generation means, to enable more efficient searching and updating of database 102.

### Stream Delivery

In one embodiment, program files, such as audio files, are delivered to users as streamed data. The relationship discovery engine described in U.S. Patent Application Serial Number 09/846,823, filed on April 30, 2001, Patent No. X,XXX,XXX, describes one way to implement a personalized radio station, which may be used in conjunction with the present invention. The radio sequence transmitter 121 may deliver units of data to jukebox 103 in a format wherein each unit encodes a period of music. Since radio stations typically repeat their programming several times, it is beneficial to cache the data units in order to reduce the amount of transmitted data. In addition, if a sufficiently large time scale is used, different channels of the radio station may have considerable overlap among currently playing selections that are being delivered to various users. By identifying these common units, transmitter 121 can take advantage of further economies of transmission, so as to provide more efficient delivery of audio data.

In one embodiment, the transmitter 121 employs file splitting to improve the streaming performance, and provide streaming performance even in situations where channel capacity would otherwise be insufficient to provide the desired level of quality. In some embodiments, files are split prior to being stored in the content database 102 or with the compressed signal files 1615. In other embodiments, the files 101 are stored in the content database 102 or with the compressed signal files 1615 without first being split; the files are then split prior to being transmitted to a user for playback.

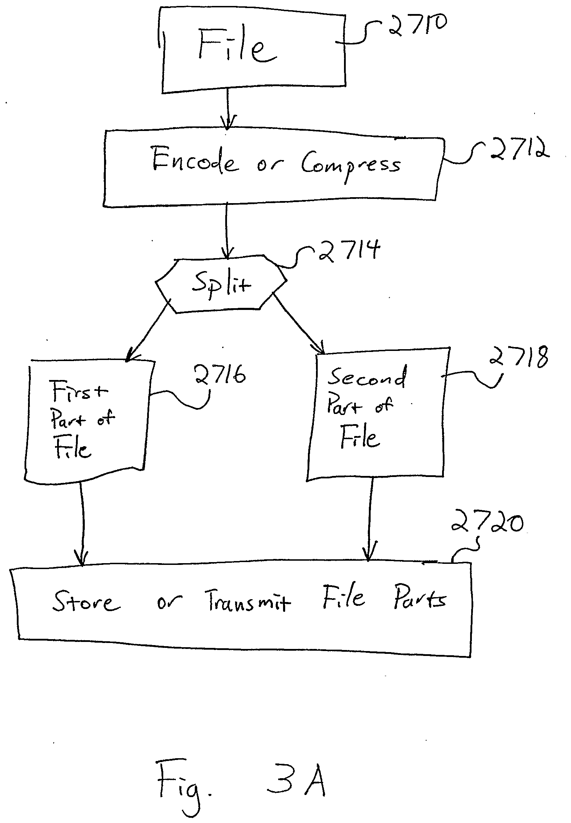

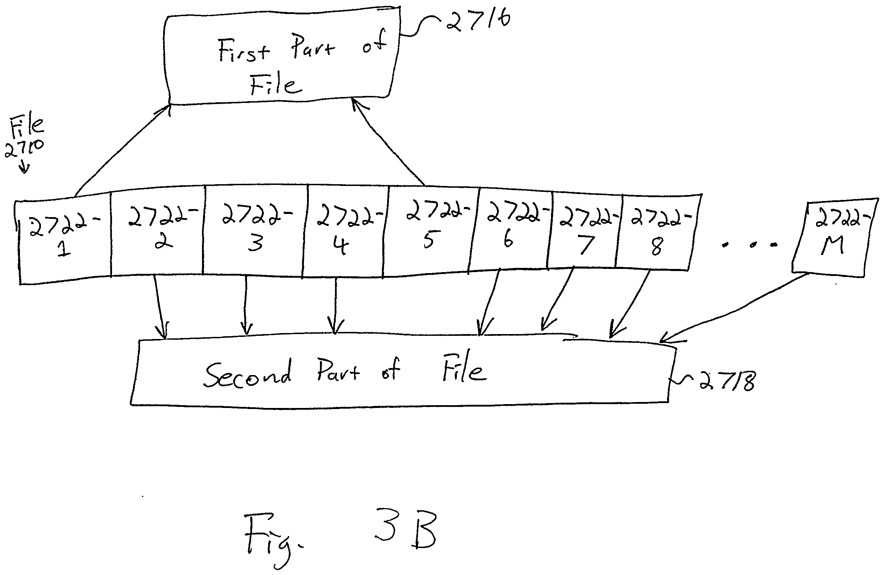

Fig. 3A is a flow diagram illustrating a method of splitting and storing a program file (such as a bitstream) containing program data such as audio, video, or the like, according to one embodiment. The process begins with the unsplit file 2710. Prior to being split, the file 2710 may be encoded and/or compressed 2712, although such operations are not essential to the present invention. Next the file 2710 is split 2714 into two or more parts, resulting in at least a first part 2716 of the file and a second part 2718 of the file. Particular techniques for splitting 2714 file 2710 are described in more detail in connection with Fig. 3B below. In one embodiment, the second part 2718 is substantially larger than the first part 2716. The file may be split 2714 into more than two parts. The parts 2716 and 2718 of the file 2710 are then stored 2720 in the content database 102 or with the compressed signal files 1615, or in some other location for later transmission. Alternatively, in an embodiment wherein files are split 2714 immediately prior to being transmitted, parts 2716 and 2718 are transmitted 2720 to an end user or remote computer for playback.

Fig. 3B is a block diagram illustrating an example of a method of splitting 2714 file 2710 into parts 2716, 2718 according to one embodiment. In the illustrated example, the file 2710 has M bits 2722-1 through 2722-M. The system generates first part 2716 of the file 2710 by taking N out of every P bits. The system generates second part 2718 of the file by taking the remaining P-N out of every P bits. In Fig. 3B, N is equal to one, and P is equal to four. Thus, the system assigns first bit 2722-1 to first part 2716, and assigns the next three bits 2722-2 through 2722-4 to second part 2718. The system then assigns fifth bit 2722-5 to first part 2716 and the next three bits 2722-6 through 2722-8 to second part 2718. The system repeats this pattern until all the bits of the file 2710 have been assigned to one of first and second parts 2716, 2718. In short, then, the system divides file 2710 into sections, with the first bit (or some other bit) of each section being sent to the first part 2716, and the remaining bits of each section being sent to the second part 2718. In general, the splitting technique of the present invention results in two or more sections 2716, 2718 each of which cannot be played back on its own, but can be played only when recombined with the other section or sections.

In one embodiment, N is equal to one, and P is equal to twenty, so that the first part 2716 is approximately 5% the size of the original file 2710, and the second part 2718 is approximately 95% the size of the original file 2710.

One skilled in the art will recognize that the system of the invention is not limited to file-splitting by bits, but may split files according to other units, such as bytes, or simply an arbitrary unit size. Alternatively, other file-splitting techniques may be used. For example, the system can include all headers, compression table selectors and scale factors into the first section 2716, and include all encoded program data (such as audio or video) into the second part 2718. Other methods of splitting the file 2710 into two or more parts may also be used.

In general, it is desirable in most embodiments that each part of the file 2710 is not decodable or able to be played back on its own, but can only be decoded and/or played back when recombined with the remaining part(s). This allows a part to be handled, transmitted, cached, or otherwise processed, without concerns that a user may permanently store and reuse an unauthorized copy of the program. Since a part cannot be used independently to recreate a recognizable facsimile of the signal in the original file 2710, the part can be cached by a client machine without any danger that the client has been given an unauthorized, useable persistent copy of the program file 2710. The ability to not provide a persistent usable copy of the program file can be advantageous because copyright holders may not wish to authorize such persistent copies, since the persistent copy could cannibalize revenues from sales of the program file in a tangible medium (such as audio CDs), or paid future downloads, streamed or otherwise, of the program file.

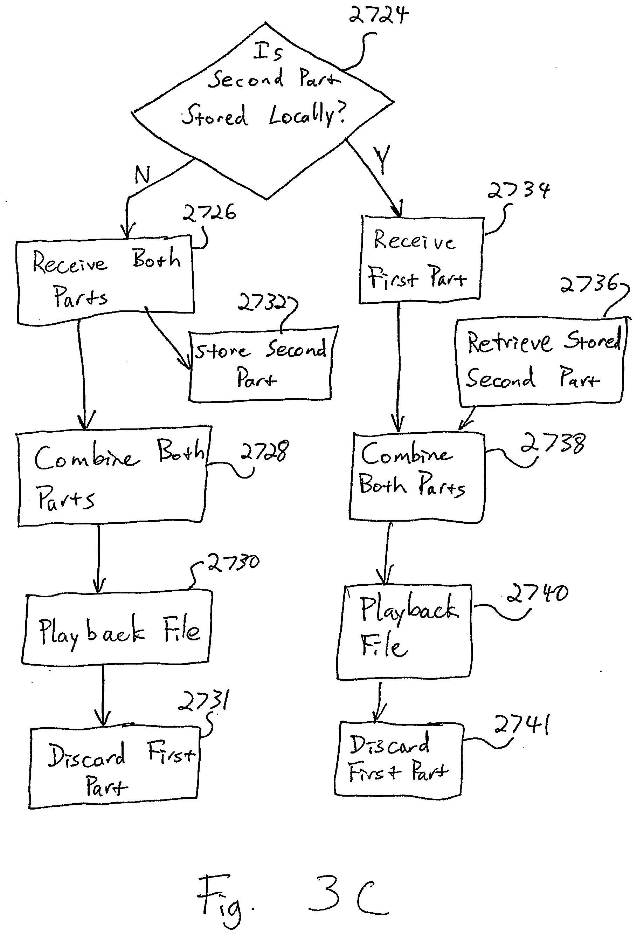

Fig. 3C is a flow diagram illustrating a method of receiving and playing a previously split program file according to one embodiment of the present invention. When a file is to be transmitted from stream delivery system 150 to the jukebox 103, the jukebox 103 or server 1614 determines 2724 whether the second part 2718 of the file 2710 has previously been stored, or cached, locally and is available for retrieval. If the second part 2718 is not available locally for retrieval, jukebox 103requests transmission of both parts 2716, 2718 of the file 2710. In response, server 1614 retrieves the requested parts 2716, 2718 from the files 1615 or the content database 102 (depending on where the parts 2716, 2718 have been stored), and transmits both the parts 2716, 2718 of the file 2710 to the jukebox 103, which receives 2726 them. Alternatively, if the files 2710 are stored unsplit, server 1614 retrieves the file 2710 to be sent, splits the requested file according to techniques described above, and then transmits the parts 2716, 2718 to the jukebox 103, which receives 2726 them.

Upon receiving 2726 parts 2716, 2718, in one embodiment the jukebox 103 stores 2732 the second part 2718 locally, so as to avoid the need to retransmit the second part 2718 if it is needed in the future. The jukebox 103 combines 2728 both parts 2716, 2718, and plays back 2730 the recombined program file 2710. This reception 2726, combination 2728, and playback 2730 may all take place concurrently, for example according to a streamed transmission methodology. In one embodiment, as the bits arrive at the jukebox 103, they are combined 2728 and played back 2730; the jukebox 103 need not wait until the entirety of the parts 2716, 2718 are received 2726 before combining 2728 and playing them back 2730. In one embodiment, the recombined file 2710 and the first part 2716 are discarded 2731 after or during playback. Since the cached second part 2718 represents only a portion of the program file 2710 and in one embodiment cannot be decoded or played back on its own, the invention prevents users from retaining an unauthorized playable copy of the program file 2710. Ultimate control over the user's playback of the program file 2710 thus remains with the server 1614, since the stored second part 2718 cannot be used to play back of the file 2710 until the server 1614 retransmits the first part 2716.

If the second part 2718 has been received and stored locally in a prior session, jukebox 103 requests transmission of only the first part 2716 of the file 2710. In response, server 1614 retrieves the requested first part 2716 from the files 1615 or the content database 102, and transmits the first part 2716 to the jukebox 103, which receives 2734 it. Alternatively, if the files 2710 are stored unsplit, server 1614 retrieves the file 2710 to be sent, splits the requested file according to techniques described above, and then transmits the first part 2716 of the file 2710 to the jukebox 103, which receives 2734 it. The jukebox 103 retrieves 2736 the second part 2718 from local storage and combines 2738 the first and second parts 2716, 2718 to reconstruct the file 2710. The jukebox 103 plays back 2740 the reconstructed program file 2710. In one embodiment, as the bits arrive at the jukebox 103, they are combined 2738 with the stored second part 2718 to form a representation of the program file and played back 2740; the jukebox 103 need not wait until the entirety of the first part 2716 is received 2734 before combining and playing back the program. In other words, playback 2740 may take place while the first part 2716 is being streamed. As described above, in one embodiment, the recombined file 2710 and the first part 2716 are discarded 2731 after or during playback.

As can be seen from the description above, it is not necessary to transmit the second part 2718 more than once. The second part 2718 can be stored locally after the first transmission, so that, in one embodiment, only the first part 2716 need be transmitted for subsequent streaming playback of the program file 2710. Since in some embodiments the stored second part 2718 is substantially larger than the first part 2716, the present invention greatly reduces bandwidth requirements for streaming playback of the program file 2710. After the second part has been stored locally 2732, even clients with slow connections may effectively stream the program file 2710. Thus, from the user's perspective, the program file 2710 appears to be streamed in a manner equivalent to conventional streaming.

In addition, the described file splitting may provide advantages in licensing distribution of programs for playback by users. The file splitting benefits the licensor because the user does not receive a persistent usable copy of the program file, and the server retains control of playback of the program file 2710. This is advantageous because in contexts where blanket licensing or compulsory licensing is available for providing streamed data, in audio programming for example, a persistent copy would cannibalize revenues from future licensed streamed data downloads, and lack of control would make collecting licensing revenues difficult. The file splitting benefits users who do not want to wait while a large file is transmitted and received before accessing the program file. By splitting the file and storing part locally, transmission of large and unwieldy amounts of data in real-time is unnecessary. The user has quick access to the program file, even if he or she is using a slow communication channel.

The present invention thus improves efficiency in the transmission of program files such as audio or video files, and helps avoids bottlenecks associated with conventional streaming techniques, while still providing control and security.

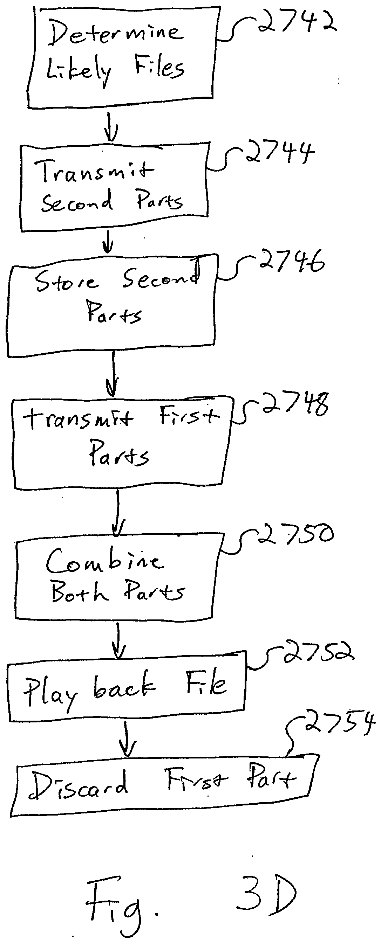

Fig. 3D is a flow diagram illustrating a method of receiving and playing a previously split program file according to one embodiment of the present invention, so as to provide improved streaming performance from a user's perspective, even if adequate bandwidth to stream the entire file 2710 is not available, through advance downloading of the second section 2718. For example, the second section 2718 may be transmitted in advance of the actual playback of an audio or video program in a first session, thus avoiding potential bottlenecks that may result when the entire program file 2710 is transmitted upon user demand according to streamed techniques. Advance transmission can be performed at off-peak times, thus avoiding bandwidth bottlenecks. This advance transmission can occur when the user is not actually listening to music, so as to facilitate improved usage of an otherwise idle network connection.

The jukebox 103 determines 2742 which program files are likely to be requested by a user, so that at idle times it can transfer data that is likely to be useful in the future. Such determination may be made, for example, by using the learned artist relationships described in U.S. Patent Application Serial Number 09/846,823, filed on April 30, 2001, Patent No. X,XXX,XXX, in order to "guess" which tracks the user is most likely to request in the future. Alternative methods of determination may also be used. In some embodiments, the files the user will likely want may be known, such as when the user listens to a personalized radio station, or tends to listen to a particular online radio station. Such radio stations often have a list of the files that will be streamed later. Thus, this list can be used to determine 2742 what files will be required.

After the jukebox 103 determines 2742 what files will likely be required, the jukebox 103 requests the second parts 2718 of the files at a time when the connection is idle, or when sufficient bandwidth exists to transmit files. The authorization and content server 1614 then transmits 2744 the requested second parts 2718 to the jukebox 103. The jukebox 103 locally stores 2746 the second parts 2718 to the files. At a later time, when a user requests that a program file 2710 be streamed, the jukebox 103 requests the first part 2716 of the program file 2710, as described above. In response, authorization and content server 1614 transmits 2748 the first part 2716. The jukebox 103 combines 2750 the received first part 2716 with the stored second part 2718 to form a representation of the file 2710 and plays back 2752 the representation of the file 2710. Such a technique permits higher-quality playback than would otherwise be available, by pre-transmitting a significant portion of the data needed for playing back the media program. As described above, in one embodiment, the recombined file 2710 and the first part 2716 are discarded 2754 after or during playback.

In one alternative embodiment, instead of transmitting 2744 the second parts 2718 over a network, the second parts 2718 may be stored on physical media (such as a compact disc or floppy disk). That physical media is then physically sent to the location of the jukebox 103, where it can act as a local storage device, or the second parts 2718 may be transferred from the physical media to desired local storage. Thus, even for slow network connections, or for very large files, the user may enjoy a streaming experience, while the server retains control of the program file.

In another embodiment, the file is further split according to circumstances surrounding its transmission. The stream delivery system 150 begins to transmit all or part of the program file, such as an audio file, to the jukebox 103. When the program file, or part of the program file is partially transmitted, transmission is stopped. This stop can occur because of a disconnection between the stream delivery system 150 and the jukebox 103, because a user wishes to stop transmission and use the bandwidth for other purposes (such as when skipping to the next streamed song in a personalized radio station), or other reasons. The partially transmitted section of the program file or part of the program file is stored locally. Then, at a later time, the rest of the program file or part of the program file is transmitted and combined with the stored part. Such a process is more efficient than starting to transmit the entire program file or part of the program file from the beginning if it was not completely transmitted in a prior session.

In one embodiment, the size of the transmitted information is used to determine whether the entire file or section has been transmitted, and if not, what further information must be transmitted. At the beginning of transmission, the stream delivery system 150 sends information to the jukebox 103 indicating the size of the file and parts to be transmitted. This information may be sent to the jukebox 103 in other ways as well, as part of a sequence listing, for example. The jukebox 103 can then use the received size of the file in conjunction with the stored file size to determine what remaining information is needed from the stream delivery system 150. Other methods to identify what further information is needed to complete a partially received file may also be used.

For example, one embodiment splits a 1000 byte audio file into two parts, a first section 2716 of 50 bytes, and a second section 2718 of 950 bytes. The stream delivery system 150 transmits 800 bytes of the second section 2718 to the jukebox 103. At this point, a user chooses to start transmission of another audio file, and end transmission of the first audio file. The transmitted 800 bytes of the second section 2718 are stored locally. Thus, to allow the user to listen to the first audio file in its entirety, only the remaining 150 bytes of the second part 2718 need be transmitted to the jukebox. This subsequent transmission of the remaining 150 bytes may be done as needed, such as when a user begins to listen to the audio file again and the first 800 bytes are taken from local storage, then the last 150 bytes are received from the stream delivery system. This transmission can also be performed in advance of the time the user wishes to listen to the audio file, such as a scheme where the jukebox 103 periodically checks for partial file sections, such as partial second parts 2718, and automatically request transmission of the rest of the second part 2718. The jukebox 103 may identify partial file sections by comparing the total file size to the stored size, and then requesting only the missing information, or through other methods.

In another alternative embodiment, instead of discarding the first part 2716, the jukebox 103 encrypts the first part 2716 and stores the first part 2716 locally. This further reduces the amount of data that must be transmitted for program file 2710 playback. The server 1614 may still retain control over playback of the program file 2710 by controlling when the jukebox 103 may decrypt the first part 2716, for recombination with the second part 2718 and playback of the program file 2710. The second part 2718 could also be encrypted in place of, or in addition to, the first part 2716.

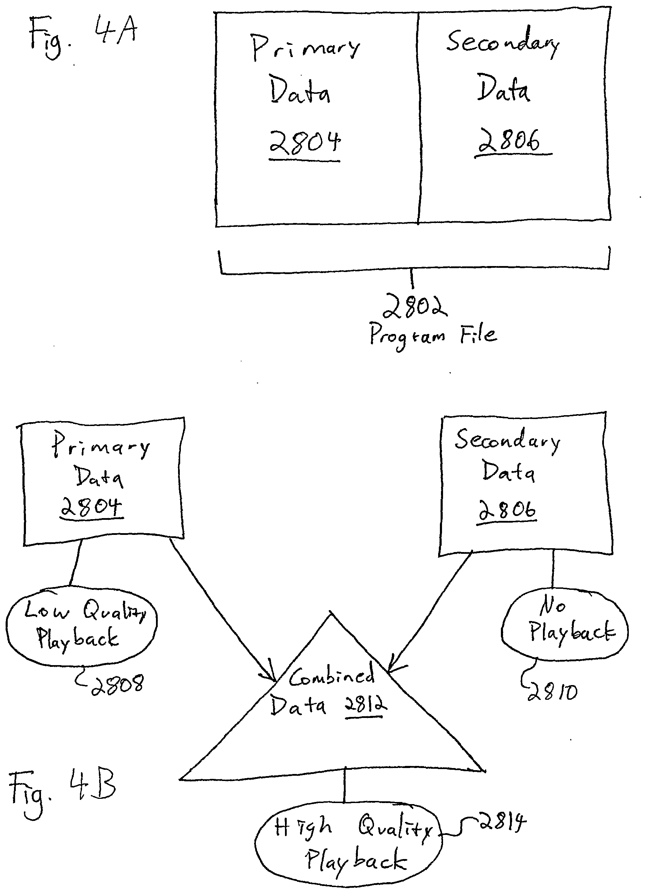

In yet another embodiment, transmitter 121 employs scalable coding to increase the quality of audio output despite limitations in channel capacity. Fig. 4A is a block diagram illustrating an example of a scalably-coded program file, including data stored in two sections 2804, 2806 that together form a program file 2802. Primary set of data 2804 is sufficient to play back the program file 2802 at a low quality level. Secondary set of data 2806 may be added to the primary set 2804 for higher-quality playback. The sets of data 2804, 2806 may be stored separately in the content database 102 or with the signal files 1615, or may be stored in a combined state, to be separated and transmitted as needed.

Fig. 4B is a block diagram illustrating the use and combination of primary data 2804 and secondary data 2806 to provide different playback quality levels. As mentioned above, the primary data 2804 is sufficient to play back the program file 2802 at a low quality level 2808. In one embodiment, the secondary data 2806 alone does not provide information sufficient for playback 2810 of the program file 2802. However, when the secondary data 2806 is combined 2812 with the primary data 2804, the combined data 2812 is sufficient to play back the program file 2802 at a high quality level 2814. For example, if the program file 2802 is an audio file, low-quality audio can be produced using the primary data 2804. Audio cannot be produced with secondary information 2806 alone. If secondary information 2806 is combined with the primary information 2804, output quality is enhanced. In one embodiment, additional levels of information may also be provided, each of which can be combined with the lower levels to further enhance output quality. This allows caching of lower-quality audio received in a first session and later receiving secondary information 2806 in a second session, which enables the jukebox 103 to combine the primary and secondary information to output audio of increased quality.

Since different sets of data are available that successively improve program file 2802 quality level, the quality of the output by the jukebox 103 depends on how much data can be transmitted in the time available. The first time an audio track is transmitted, transmitter 121 provides jukebox 103 with the primary information 2804 first, which allows the jukebox 103 to playback a representation of the program file 2802. Secondary 2806 (and additional) information is transmitted to allow improved quality levels as time permits. Jukebox 103 outputs the audio track with whatever level of information it has received at the time output is to commence. If only primary information 2804 has been received, jukebox 103 outputs lower-quality audio. If secondary information 2806 has also been received, it is combined with the primary information 2804 and jukebox 103 outputs higher-quality audio.

In addition, jukebox 103, in one embodiment, caches the received information. If the same audio track is requested at a later time, transmitter 121 provides jukebox 103 with the next level of information. Therefore, even if jukebox 103 was unable to provide higher-quality audio during the first listening, it may be able to provide higher-quality audio during subsequent listenings, by combining secondary (and/or additional) information with the previously cached primary information to generate the higher-quality audio output. Such a technique facilitates the output of high quality audio even when network transmission capacities are limited.

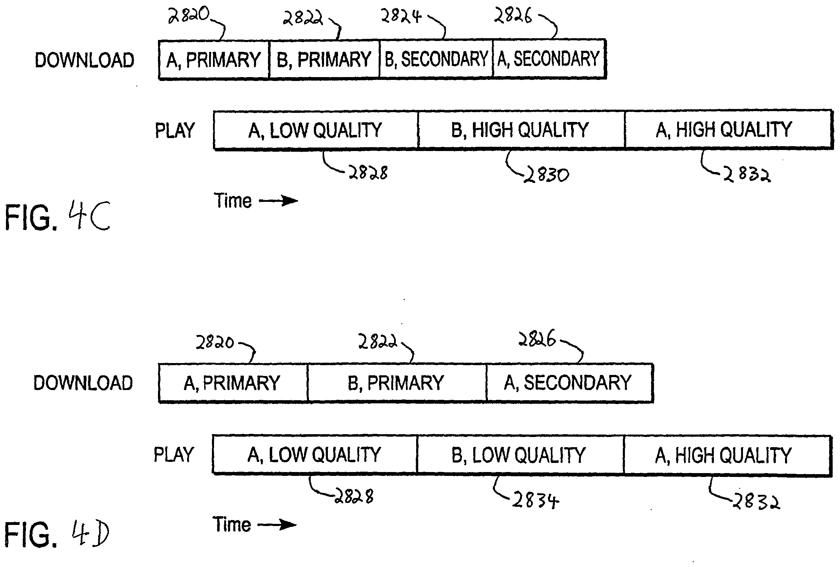

Referring now to Fig. 4C, there is shown an example of a transfer sequence for a channel with moderate bandwidth. Initially, tracks A and B are requested. Primary information for track A 2820 is downloaded. As primary information 2820 is downloaded, a low-quality representation of track A 2828 is played, according to conventional streaming audio techniques. Downloaded primary information 2820 is cached.

Once the download of primary information for track A 2820 is complete, jukebox 103 begins to download primary information for track B 2822. This download may begin even though track A is still playing 2828. In the example shown in Fig. 4C, the download of primary information for track B 2822 is completed while track A is still playing 2828. Therefore, jukebox 103 begins to download secondary information for track B 2824. Then, when playback 2828 of track A is finished, jukebox 103 is able to output a high quality representation of track B 2830, by combining secondary information 2824 with previously downloaded primary information 2822. The output of the high quality version 2830 may take place while secondary information 2824 is still being downloaded, again using streaming techniques.

In the example of Fig. 4C, a request to play track A a second time is received. Therefore, once secondary information 2824 has been downloaded, jukebox 103 begins to download secondary information for track A 2826. Once the high quality version of track B 2830 is finished playing, jukebox 103 outputs a high quality representation of track A 2832, by combining secondary information 2826 with previously downloaded primary information 2820.

Referring now to Fig. 4D, there is shown another example of a transfer sequence for a channel with a lower bandwidth than that of Fig. 4C. Here, the secondary information for track B 2824 is not downloaded, because it would not arrive in time to improve the output of track B. Accordingly, a lower quality version of track B 2834 is output in lieu of the higher quality version 2830 of Fig. 4C. However, the higher quality version of track A 2832 can still be presented, since there is sufficient time to download secondary information for track A 2826 before the second playback of track A commences.

One skilled in the art will recognize that the tracks depicted in Figs. 4C and 4D may refer to individual songs, or song segments, or any other unit of information. One skilled in the art will further recognize that the scalable coding techniques described herein may be applied to video data, or to any other type of data, and are not limited to audio data.

The scalable coding techniques of the present invention thus facilitate the trading off of quality in bandwidth-limited situations, without requiring complex bandwidth estimation and determination. If insufficient bandwidth exists for the delivery of higher-quality versions, the system simply continues playing lower quality versions of tracks. No skipping, pausing, or other interruption of the audio stream is necessary. Jukebox 103 can determine whether to continue any particular transfer to improve the available quality or to download the next requested track, based on upcoming track selections. At any given moment, the next data segment to request can be determined by requesting the highest priority data segment from the next few audio segments. In one embodiment, priorities are defined to either play audio at a maximum short-term quality level or at a consistent quality level.

In one embodiment, jukebox 103 requests data for downloading according to the following order of priorities:

| **Priority** | **Type of value** |
|---|---|
| 1 | Primary information, next track |
| 2 | Secondary information, next track |
| 3 | Primary information, track after next |
| 4 | Secondary information, track after next |
| 5 | Tertiary information, next track |
| 6 | Tertiary information, track after next |
| 7 | Data for subsequent tracks |

One skilled in the art will recognize that any desired priority list may be provided. For example, if item 5 in this table is moved up to the third rank, the system will give more priority to high quality presentation at the possible expense of inconsistent quality on lower bandwidth connections.

In one embodiment, locally-cached downloaded data is stored in an encrypted or otherwise protected form, so as to prevent its abuse and to inhibit copyright infringement. In another embodiment, primary information is stored in an encrypted or otherwise protected form, but secondary and subsequent information is not, since the secondary and subsequent information is unusable without access to the primary information.

In one embodiment, jukebox 103 downloads data sets when the user is not actually listening to music, so as to facilitate improved usage of an otherwise idle network connection. Jukebox 103 determines which items are likely to be requested by a user, so that at idle times it can transfer data that is likely to be useful for rendering audio segments in the future. Such determination may be made in the same way as described above with respect to the split files of Fig. 3D. In one embodiment, secondary information 2806 for such "predicted" audio segments is downloaded first, so that encryption is not required unless and until the user actually requests the tracks and the primary information 2804 is to be downloaded. Scalable coding may also be used to process a signal of a conventional broadcast radio station that plays music. An audio recognition device, as is conventional, pre-processes the signal in order to identify individual songs. Those portions of audio information that are not music are compressed and stored, and a transfer sequence is sent to jukebox 103 that references these recently encoded non-music segments as well as previously known and cached musical segments. The recently encoded segments can be encoded at a lower quality level in order to allow a jukebox 103 connected by a low speed line to transfer the recently encoded segments in real-time while still playing the cached musical segments at a higher quality level.

As with file splitting, portions of scalably coded files may also be sent on physical media rather than transmitted over a network. Similarly, if sections of scalably coded information are only partially transmitted, they may be stored locally, and then only the information not previously received is transmitted in a subsequent session.

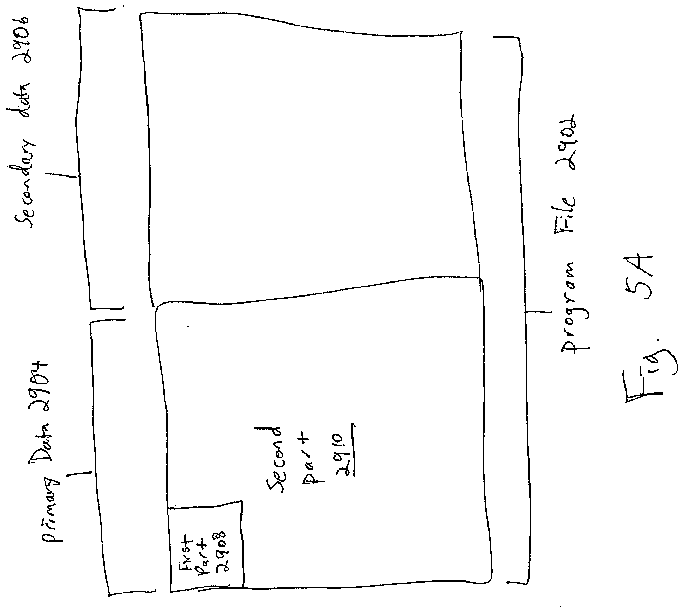

File splitting and scalable coding may also be used in combination. Fig. 5A is a block diagram illustrating how a program file 2902 may be divided into primary data 2904 and secondary data 2906, and the primary data 2904 file split into a first part 2908 and a second part 2910. The primary data 2904 is split as described above with respect to Figs. 3A and 3B. This allows almost all of the primary data 2904 and secondary data 2906 to be cached locally without requiring encryption. Since, in one embodiment, the second part 2910 of the primary data 2904 is not playable without the first part 2908, and the secondary data 2906 is not playable without a playable set of primary data 2904, all of the program file 2902 except the first part 2908 of the primary data 2904 may be cached locally without providing the user with a usable copy of the program file 2902 that may be played back. This allows the server 1614 to retain control of playback of the program file 2902, as long as the first part 2908 of the primary data 2904 is not stored locally in a usable form.

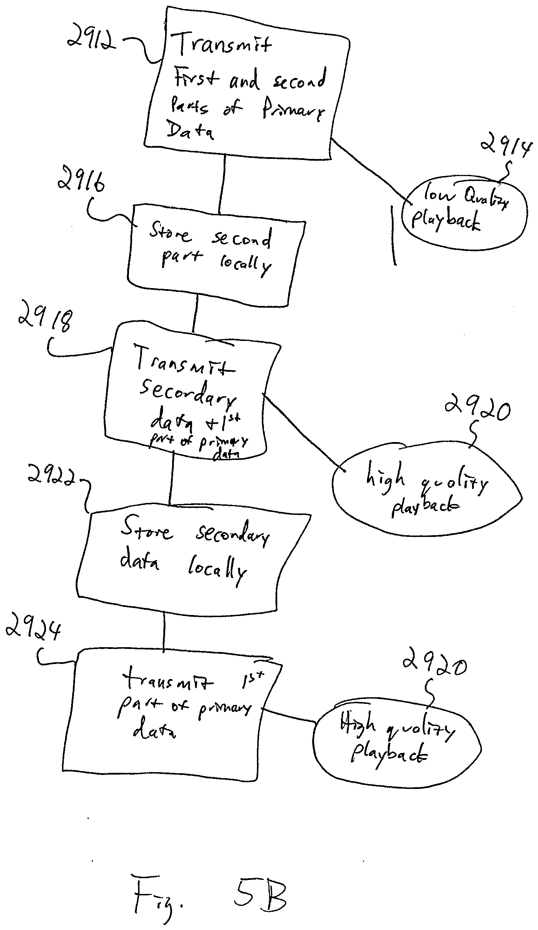

Fig. 5B is a block diagram that illustrates how such a scheme provides advantages for streaming program files 2902. First, the first and second parts 2908, 2910 of the primary data 2904 are transmitted 2912 to the client by the server 1614. The first and second parts 2908, 2910 may be transmitted at roughly the same time in response to the jukebox 103 requesting the program file 2902. Alternatively, the second part 2910 may be transmitted in advance, after determination of what files 2902 are likely to be desired, as described above with respect to Fig. 3D. In an embodiment wherein the second part 2910 is transmitted in advance, the first part 2908 is transmitted in response to the jukebox 103 requesting the program file 2902. The first and second parts 2908, 2910 are sufficient to provide low quality playback 2914. The second part 2910 is then stored 2916 locally, and the first part 2908 is discarded. At a later time, such as when the jukebox 103 requests the program file 2902 again, the server 1614 transmits 2918 the first part of the primary data 2908 and the secondary data 2906. This allows sufficient information for the program file 2902 to be played back at a high quality level 2920. The secondary data 2906 is stored locally 2922, and the first part 2908 of the primary data 2904 is discarded. For subsequent playback of the program file 2902, only the first part 2908 of the primary data 2904 need be transmitted 2924 in order to enable high quality level playback 2920. Again, after such playback, the first part 2908 of the primary data 2904 is discarded, so that the server may retain control of program file 2902 playback. As an alternative to discarding the first part 2908, the first part 2908 may be encrypted, with decryption only occurring under the server's 1614 control.

Thus, a significant portion of the program file 2902 may be stored locally, with only the relatively small first part 2908 being transmitted from the server 1614 to provide the user with streaming file performance. This allows high quality streaming performance even over a relatively narrow bandwidth connection.

As described above, when scalable coding or file splitting is used, the jukebox 103 plays back a representation of the program file. This representation may be an exact digital replica of the program file, such as when the program file is split, all parts are transmitted to the jukebox 103, and the entire file is combined for playback. The representation may also be a less than exact replica, such as when only some portions of a scalably coded program file are combined and played back.

### Recommendation Engine

One method of determining in advance what program files a user may want streamed is through use of a recommendation engine, described more fully in U.S. Patent Application Serial Number 09/846,823, filed on April 30, 2001, Patent No. X,XXX,XXX. Note that there are also many other ways to determine what program files a user may want streamed in advance. Referring now to Fig. 2, the jukebox 103 or personalized radio station accepts a user's selections of music tracks and makes additional recommendations as to music tracks the user is likely to enjoy. The user is able to search for particular tracks and/or artists, and to control the playback of selected tracks. The system monitors the user's behavior with regard to searching, listening, and playback control, and generates and analyzes logs of such behavior in order to refine recommendations. Advertising, offers, and other information may be selected and presented to the user based on observations of user behavior and analysis as to which material may be of interest to the user.

Compressed signal files 1615 contain descriptions of music tracks, and in one embodiment contains digitized representations of the music tracks themselves. Compressed signal files 1615 are stored, for example, using conventional database storage means or in a conventional file system, and in one embodiment include several fields providing descriptive information regarding music tracks, such as title, album, artist, type of music, track length, year, record label, and the like.

Selected tracks are played via jukebox 103, which is implemented in one embodiment as a standalone application, or as a plug-in or bundled feature in browser 105. Jukebox 103 receives digitized representations of music tracks and plays the tracks over a speaker or headphones at the user's computer. In one embodiment, jukebox 103 can download and save music tracks in local storage (such as a hard disk drive, memory, or other local storage) in a compressed format, such as MP3, for playback on the user's computer or on a portable digital music listening device.

Recommendation engine 107 generates track preferences based on user information. Radio sequence generator 1613 uses track preferences, along with general constraints 1616 and format definitions 1611, to generate a sequence of tracks to be played. General constraints 1616 include particular rules and restrictions on the sequence of tracks, as may be required by law or as may be determined to be desirable for marketing or aesthetic purposes or for other reasons. Examples of constraints 1616 include: "no more than one song per hour from a particular album," or "do not play a fast song immediately after a slow song." Radio sequence generator 1613 may also incorporate a randomization element, if desired, and may be configurable by a website operator.

The track list is sent to jukebox 103 to be played to the user. A user activates jukebox 103 and selects music tracks for playback and/or purchase, via a user interface including controls and selectors. Authorization and content server 1614 checks that the appropriate security measures are in place (in order to prevent the user from "hacking" jukebox 103 to request unauthorized tracks from content server 1614), obtains the actual music tracks from files 1615, and provides them to jukebox 103 for output.

In one embodiment, the connections among the various elements of Figs. 1A and 2 are implemented over the Internet, using known protocols such as HTTP and TCP/IP. Secure sockets layer (SSL) or other encryption techniques may be employed for added security.

The recommendation engine may be employed in connection with conventional radio station programming techniques, to implement an improved personalized radio station. As is known in the art, conventional radio stations typically divide a programming block into a number of segments. Each segment is assigned a programming category, such as "power hit," "new release," "recurrent hit," and the like. For a particular programming block, music tracks are assigned to each of the segments based on the particular programming format of the radio station. Music scheduling software, such as Selector® by RCS Sound Software, applies heuristic rules for repetition limits and classes of songs, to automatically generate track lists for use by radio stations. The recommendation engine may be combined with such existing radio station programming techniques, to populate the defined segments with music tracks that are likely to appeal to a particular listener. Additional rules may be applied in generating track lists, so as to limit undesired repetition and to comply with limiting legislation (such as the Digital Millennium Copyright Act) and other restrictions.

From the above description, it will be apparent that the invention disclosed herein provides a novel and advantageous system and method for providing a user with a streaming program file experience. The foregoing discussion discloses and describes merely exemplary methods and embodiments of the present invention. The invention may be applied to other domains and environments, and may be employed in connection with additional applications where personalized recommendations are desirable. Accordingly, the disclosure of the present invention is intended to be illustrative, but not limiting, of the scope of the invention, which is set forth in the following claims.

## Claims

1. A computer-implemented method of receiving a media file (2710) comprising at least a first part (2716) and a second part (2718) to be played by a user device, the method comprising:
receiving over the network and from a remote server in a first transmission the second part (2718) of the media file;
storing the second part (2718) at the local storage device;
receiving over the network and from the remote server (1614) in a second transmission subsequent to the first transmission the first part (2716) of the media file and not the second part (2718) of the media file; and
combining the first part (2716) and the second part (2718), so that the media file can be played by the user device;
**characterised in that** the second part (2718) is not usable without being combined with the first part (2716), and **in that** the method comprises discarding the first part (2716) after playback.

2. The computer-implemented method of claim 1, wherein the received parts of the media file are encoded, and the second part (2718) is undecodable unless combined with the first part (2716).

3. The computer-implemented method of one of the preceding claims, wherein the representation of the media file is unplayable at the user device without authorization by the remote server.

4. The computer-implemented method of claim 3, wherein authorization comprises the reception over the network and from the remote server the first part (2716) of the media file.

5. The computer-implemented method of one of the preceding claims, wherein neither the first part (2716) nor the second part (2718) is independently usable to recreate a recognizable facsimile of the content of the media file.

6. The computer-implemented method of one of the preceding claims, wherein the media file is divided into a plurality of sections, each section comprising a plurality of bits, wherein the first part (2716) comprises a first subset of bits from each section, and the second part (2718) comprises the remaining bits from each section.

7. The computer-implemented method of one of the preceding claims, wherein the media file is divided into a plurality of sections, each section comprising a plurality of bits, wherein the first part (2716) comprises a first bit from each section, and the second part (2718) comprises the remaining bits from each section.

8. The computer-implemented method of claim 6 or 7, wherein the media file is divided into a plurality of sections, wherein one of the sections contains exactly X bits, and wherein each of the remaining sections contains exactly Y bits, wherein X is less than or equal to Y, and wherein the first part (2716) comprises a first subset of bits from each section, and the second part (2718) comprises the remaining bits from each section.

9. The computer implemented method of claim 8, wherein Y equals 20.

10. The computer implemented method of one of the preceding claims, wherein the first part (2716) comprises headers, compression table selectors and scale factors of the media file.

11. The computer-implemented method of one of the preceding claims, wherein the first part (2716) is not stored at the local storage device after the playing of the media file.

12. The computer-implemented method of one of the preceding claims, wherein the combined first part (2716) and second part (2718) is not stored at the local storage device after the playing of the media file.

13. The computer-implemented method of one of the preceding claims, wherein the played representation of the media file is an exact digital copy of the media file.

14. The computer implemented method of one of the preceding claims, wherein:
the media file further comprises a third part;
the first and second parts (2716, 2718) are combinable to form a representation of the media file at a first quality level; and
the first, second, and third parts are combinable to form a representation of the media file at a second quality level higher than the first quality level.

15. The computer implemented method of claim 14, further comprising:
receiving over the network and from the remote server the third part of the media file;
storing the third part at the local storage device;
combining the received third part with the first part (2716) and the stored second part (2718) to form the representation of the media file at the second quality level; and
playing the representation of the media file after combining the first, second, and third parts.

16. The computer implemented method of claim 15, wherein the third part is received over the network and from the remote server in a transmission other than the first transmission.

17. The computer implemented method of claim 15, wherein the second part (2718) is not received with the third part that is received over the network and from the remote server in a transmission other than the first transmission.

18. A computer-implemented method of claim 1, wherein the first part (2716) comprises a representation of the media file at a first quality level, and wherein the first and second parts (2716, 2718) are combinable to form a representation of the media file at a second quality level higher than the first quality level.

19. The computer-implemented method of claim 18, wherein the first part (2716) is not stored at the local storage device after the playing of the media file.

20. The computer-implemented method of claim 18 or 19, wherein the representation of the media file is played after combining the first and second parts (2716, 2718).

21. The computer-implemented method of claim 18 to 20, wherein the representation of the media file is played in response to a command, and the representation of the media file is generated from at least the first part (2716).

22. The computer-implemented method of claim 18 to 21, wherein the representation of the media file is generated from the second part (2718) as well as the first part (2716) if both the first part (2716) and the second part (2718) have been received at the time of playback.

23. An apparatus arranged to carry out a method according to any one of the preceding claims.

## Patentansprüche

1. Computerimplementiertes Verfahren zum Empfangen einer Mediendatei (2710), die mindestens einen ersten Teil (2716) und einen zweiten Teil (2718) umfasst, die von einer Benutzervorrichtung abgespielt werden sollen, wobei das Verfahren umfasst:
Empfangen des zweiten Teils (2718) der Mediendatei über das Netzwerk und von einem entfernten Server in einer ersten Übertragung;
Speichern des zweiten Teils (2718) auf der lokalen Speichervorrichtung;
Empfangen des ersten Teils (2716) der Mediendatei über das Netzwerk und von dem entfernten Server (1614) in einer zweiten Übertragung nach der ersten Übertragung und nicht des zweiten Teils (2718) der Mediendatei; und Kombinieren des ersten Teils (2716) und des zweiten Teils (2718), so dass die Mediendatei von der Benutzervorrichtung wiedergegeben werden kann;
**dadurch gekennzeichnet, dass** der zweite Teil (2718) nicht verwendbar ist, ohne mit dem ersten Teil (2716) kombiniert zu werden, und dass das Verfahren das Verwerfen des ersten Teils 2716) nach der Wiedergabe umfasst.

2. Computerimplementiertes Verfahren nach Anspruch 1, wobei die empfangenen Teile der Mediendatei kodiert sind und der zweite Teil (2718) nicht dekodierbar ist, wenn er nicht mit dem ersten Teil (2716) kombiniert wird.

3. Computerimplementiertes Verfahren nach einem der vorangehenden Ansprüche, wobei die Darstellung der Mediendatei auf der Benutzervorrichtung ohne Autorisierung durch den entfernten Server unabspielbar ist.

4. Computerimplementiertes Verfahren nach Anspruch 3, wobei die Autorisierung den Empfang über das Netzwerk und von dem entfernten Server des ersten Teils (2716) der Mediendatei umfasst.

5. Computerimplementiertes Verfahren nach einem der vorangehenden Ansprüche, wobei weder der erste Teil (2716) noch der zweite Teil (2718) unabhängig voneinander verwendbar sind, um ein erkennbares Faksimile des Inhalts der Mediendatei zu regenerieren.

6. Computerimplementiertes Verfahren nach einem der vorangehenden Ansprüche, wobei die Mediendatei in eine Vielzahl von Abschnitten unterteilt ist, wobei jeder Abschnitt eine Vielzahl von Bits umfasst, wobei der erste Teil (2716) eine erste Teilmenge von Bits von jedem Abschnitt umfasst, und der zweite Teil (2718) die restlichen Bits von jedem Abschnitt umfasst.

7. Computerimplementiertes Verfahren nach einem der vorangehenden Ansprüche, wobei die Mediendatei in eine Vielzahl von Abschnitten unterteilt ist, wobei jeder Abschnitt eine Vielzahl von Bits umfasst, wobei der erste Teil (2716) ein erstes Bit von jedem Abschnitt umfasst und der zweite Teil (2718) die restlichen Bits von jedem Abschnitt umfasst.

8. Computerimplementiertes Verfahren nach Anspruch 6 oder 7, wobei die Mediendatei in eine Vielzahl von Abschnitten unterteilt ist, wobei einer der Abschnitte genau X Bits enthält, und wobei jeder der verbleibenden Abschnitte genau Y Bits enthält, wobei X kleiner oder gleich Y ist, und wobei der erste Teil (2716) eine erste Teilmenge von Bits aus jedem Abschnitt umfasst, und der zweite Teil (2718) die restlichen Bits aus jedem Abschnitt umfasst.

9. Computerimplementiertes Verfahren nach Anspruch 8, wobei Y gleich 20 ist.

10. Computerimplementiertes Verfahren nach einem der vorangehenden Ansprüche, wobei der erste Teil (2716) Header, Kompressionstabellenauswahlschalter und Skalierungsfaktoren der Mediendatei umfasst.

11. Computerimplementiertes Verfahren nach einem der vorangehenden Ansprüche, wobei der erste Teil (2716) nach dem Abspielen der Mediendatei nicht auf der lokalen Speichervorrichtung gespeichert wird.

12. Computerimplementiertes Verfahren nach einem der vorangehenden Ansprüche, wobei der kombinierte erste Teil (2716) und zweite Teil (2718) nach dem Abspielen der Mediendatei nicht auf der lokalen Speichervorrichtung gespeichert wird.

13. Computerimplementiertes Verfahren nach einem der vorangehenden Ansprüche, wobei die abgespielte Darstellung der Mediendatei eine exakte digitale Kopie der Mediendatei ist.

14. Computerimplementiertes Verfahren nach einem der vorangehenden Ansprüche, wobei:
die Mediendatei ferner einen dritten Teil umfasst;
der erste und zweite Teil (2716, 2718) kombinierbar sind, um eine Darstellung der Mediendatei auf einer ersten Qualitätsstufe zu bilden; und
der erste, zweite und dritte Teil kombinierbar sind, um eine Darstellung der Mediendatei auf einer zweiten Qualitätsstufe zu bilden, die höher als die erste Qualitätsstufe ist.

15. Computerimplementiertes Verfahren nach Anspruch 14, ferner umfassend:
Empfangen des dritten Teils der Mediendatei über das Netzwerk und von dem Remote-Server;
Speichern des dritten Teils auf der lokalen Speichervorrichtung;
Kombinieren des empfangenen dritten Teils mit dem ersten Teil (2716) und dem gespeicherten zweiten Teil (2718), um die Darstellung der Mediendatei auf der zweiten Qualitätsstufe zu bilden; und
Abspielen der Darstellung der Mediendatei nach dem Kombinieren der ersten, zweiten und dritten Teile.

16. Computerimplementiertes Verfahren nach Anspruch 15, wobei der dritte Teil über das Netzwerk und vom entfernten Server in einer anderen Übertragung als der ersten Übertragung empfangen wird.

17. Computerimplementiertes Verfahren nach Anspruch 15, wobei der zweite Teil (2718) nicht mit dem dritten Teil empfangen wird, der über das Netzwerk und vom entfernten Server in einer anderen Übertragung als der ersten Übertragung empfangen wird.

18. Computerimplementiertes Verfahren nach Anspruch 1, wobei der erste Teil (2716) eine Darstellung der Mediendatei auf einer ersten Qualitätsstufe umfasst, und wobei der erste und zweite Teil (2716, 2718) kombinierbar sind, um eine Darstellung der Mediendatei auf einer zweiten Qualitätsstufe zu bilden, die höher als die erste Qualitätsstufe ist.

19. Computerimplementiertes Verfahren nach Anspruch 18, wobei der erste Teil (2716) nach dem Abspielen der Mediendatei nicht auf der lokalen Speichervorrichtung gespeichert ist.

20. Computerimplementiertes Verfahren nach Anspruch 18 oder 19, wobei die Darstellung der Mediendatei nach dem Kombinieren des ersten und zweiten Teils (2716, 2718) abgespielt wird.

21. Computerimplementiertes Verfahren nach Anspruch 18 bis 20, wobei die Darstellung der Mediendatei als Reaktion auf einen Befehl abgespielt wird und die Darstellung der Mediendatei aus mindestens dem ersten Teil (2716) erzeugt wird.

22. Computerimplementiertes Verfahren nach Anspruch 18 bis 21, wobei die Darstellung der Mediendatei aus dem zweiten Teil (2718) sowie dem ersten Teil (2716) erzeugt wird, wenn sowohl der erste Teil (2716) als auch der zweite Teil (2718) zum Zeitpunkt der Wiedergabe empfangen wurden.

23. Vorrichtung, die so angeordnet ist, dass sie ein Verfahren nach einem der vorangehenden Ansprüche durchführt.

## Revendications

1. Procédé, mis en oeuvre par ordinateur, de réception d'un fichier multimédia (2710), comprenant au moins une première partie (2716) et une deuxième partie (2718), lequel doit être lu par un dispositif utilisateur, le procédé comprenant les étapes ci-dessous consistant à :
recevoir sur le réseau, et en provenance d'un serveur distant, au cours d'une première transmission, la deuxième partie (2718) du fichier multimédia ;
stocker la deuxième partie (2718) au niveau d'un dispositif de stockage local ;
recevoir, sur le réseau, et en provenance du serveur distant (1614), au cours d'une seconde transmission subséquente à la première transmission, la première partie (2716) du fichier multimédia, sans recevoir la deuxième partie (2718) du fichier multimédia ; et
combiner la première partie (2716) et la deuxième partie (2718), de sorte que le fichier multimédia peut être lu par le dispositif utilisateur ;
**caractérisé en ce que** la deuxième partie (2718) n'est pas utilisable sans être combinée avec la première partie (2716), et **en ce que** le procédé comprend l'étape consistant à rejeter la première partie (2716) après lecture.

2. Procédé mis en oeuvre par ordinateur selon la revendication 1, dans lequel les parties reçues du fichier multimédia sont codées, et dans lequel la deuxième partie (2718) ne peut être décodée que si elle est combinée avec la première partie (2716).

3. Procédé mis en oeuvre par ordinateur selon l'une quelconque des revendications précédentes, dans lequel la représentation du fichier multimédia n'est pas lisible au niveau du dispositif utilisateur sans autorisation du serveur distant.

4. Procédé mis en oeuvre par ordinateur selon la revendication 3, dans lequel l'autorisation comprend la réception, sur le réseau, et en provenance du serveur distant, de la première partie (2716) du fichier multimédia.

5. Procédé mis en oeuvre par ordinateur selon l'une quelconque des revendications précédentes, dans lequel ni la première partie (2716) ni la deuxième partie (2718) ne peuvent être utilisées indépendamment en vue de recréer un fac-similé reconnaissable du contenu du fichier multimédia.

6. Procédé mis en oeuvre par ordinateur selon l'une quelconque des revendications précédentes, dans lequel le fichier multimédia est divisé en une pluralité de sections, chaque section comprenant une pluralité de bits, dans lequel la première partie (2716) comprend un premier sous-ensemble de bits provenant de chaque section, et la deuxième partie (2718) comprend les bits restants provenant de chaque section.

7. Procédé mis en oeuvre par ordinateur selon l'une quelconque des revendications précédentes, dans lequel le fichier multimédia est divisé en une pluralité de sections, chaque section comprenant une pluralité de bits, dans lequel la première partie (2716) comprend un premier bit provenant de chaque section, et la deuxième partie (2718) comprend les bits restants provenant de chaque section.

8. Procédé mis en oeuvre par ordinateur selon la revendication 6 ou 7, dans lequel le fichier multimédia est divisé en une pluralité de sections, dans lequel l'une des sections contient exactement « X » bits, et dans lequel chacune des sections restantes contient exactement « Y » bits, dans lequel « X » est inférieur ou égal à « Y », et dans lequel la première partie (2716) comprend un premier sous-ensemble de bits provenant de chaque section, et la deuxième partie (2718) comprend les bits restants provenant de chaque section.

9. Procédé mis en oeuvre par ordinateur selon la revendication 8, dans lequel « Y » est égal à 20.

10. Procédé mis en oeuvre par ordinateur selon l'une quelconque des revendications précédentes, dans lequel la première partie (2716) comprend des en-têtes, des sélecteurs de table de compression et des facteurs d'échelle du fichier multimédia.

11. Procédé mis en oeuvre par ordinateur selon l'une quelconque des revendications précédentes, dans lequel la première partie (2716) n'est pas stockée au niveau du dispositif de stockage local à l'issue de la lecture du fichier multimédia.

12. Procédé mis en oeuvre par ordinateur selon l'une quelconque des revendications précédentes, dans lequel la première partie (2716) et la deuxième partie (2718) combinées ne sont pas stockées au niveau du dispositif de stockage local à l'issue de la lecture du fichier multimédia.

13. Procédé mis en oeuvre par ordinateur selon l'une quelconque des revendications précédentes, dans lequel la représentation lue du fichier multimédia est une copie numérique exacte du fichier multimédia.

14. Procédé mis en oeuvre par ordinateur selon l'une quelconque des revendications précédentes, dans lequel :
le fichier multimédia comprend en outre une troisième partie ;
les première et deuxième parties (2716, 2718) peuvent être combinées en vue de former une représentation du fichier multimédia à un premier niveau de qualité ; et
les première, deuxième et troisième parties peuvent être combinées en vue de former une représentation du fichier multimédia à un second niveau de qualité, supérieur au premier niveau de qualité.

15. Procédé mis en oeuvre par ordinateur selon la revendication 14, comprenant en outre les étapes ci-dessous consistant à :
recevoir, sur le réseau, et en provenance du serveur distant, la troisième partie du fichier multimédia ;
stocker la troisième partie au niveau du dispositif de stockage local ;
combiner la troisième partie reçue avec la première partie (2716) et la deuxième partie (2718) stockée, en vue de former la représentation du fichier multimédia au second niveau de qualité ; et
lire la représentation du fichier multimédia à l'issue de la combinaison des première, deuxième et troisième parties.

16. Procédé mis en oeuvre par ordinateur selon la revendication 15, dans lequel la troisième partie est reçue sur le réseau, et en provenance du serveur distant, dans le cadre d'une transmission distincte de la première transmission.

17. Procédé mis en oeuvre par ordinateur selon la revendication 15, dans lequel la deuxième partie (2718) n'est pas reçue avec la troisième partie qui est reçue sur le réseau, et en provenance du serveur distant, dans le cadre d'une transmission distincte de la première transmission.

18. Procédé mis en oeuvre par ordinateur selon la revendication 1, dans lequel la première partie (2716) comprend une représentation du fichier multimédia à un premier niveau de qualité, et dans lequel les première et deuxième parties (2716, 2718) peuvent être combinées en vue de former une représentation du fichier multimédia à un second niveau de qualité supérieur au premier niveau de qualité.

19. Procédé mis en oeuvre par ordinateur selon la revendication 18, dans lequel la première partie (2716) n'est pas stockée au niveau du dispositif de stockage local à l'issue de la lecture du fichier multimédia.

20. Procédé mis en oeuvre par ordinateur selon la revendication 18 ou 19, dans lequel la représentation du fichier multimédia est lue à l'issue de la combinaison des première et deuxième parties (2716, 2718).

21. Procédé mis en oeuvre par ordinateur selon l'une quelconque des revendications 18 à 20, dans lequel la représentation du fichier multimédia est lue en réponse à une instruction, et la représentation du fichier multimédia est générée à partir d'au moins la première partie (2716).

22. Procédé mis en oeuvre par ordinateur selon l'une quelconque des revendications 18 à 21, dans lequel la représentation du fichier multimédia est générée à partir de la deuxième partie (2718) ainsi que de la première partie (2716) si la première partie (2716) et la deuxième partie (2718) ont été reçues au cours de la lecture.

23. Appareil agencé de manière à mettre en oeuvre un procédé selon l'une quelconque des revendications précédentes.
